# FASCICULE DE BREVET EUROPEEN

(11) **EP 0 837 036 B1**
(45) Date de publication et mention de la délivrance du brevet: **29.08.2007**
(21) Numéro de dépôt: 97402433.3
(22) Date de dépôt: 15.10.1997
(51) Int. Cl.: C01G 45/00, H01M 4/50

(54) **Oxydes doubles de lithium et de manganèse pour électrode positive de dispositifs électrochimiques, leur préparation et les électrodes comportant de tels oxydes**
Doppeloxide von Lithium und Mangan für positive Elektrode von elektrochemische Vorrichtungen, dessen Herstellung und diese enthaltende Elektrode
Double oxides of lithium and manganese for positif electrode of electrochemical devices, its preparation electrodes containing this oxides

(30) Priorité: 18.10.1996 FR 9612690
(43) Date de publication de la demande: 22.04.1998
(73) Titulaire: FRANCE TELECOM, 75015 Paris (FR)
(72) Inventeur: Treuil, Nadine, 33405 Talence (FR); Portier, Josik, 33170 Gradignan (FR); Campet, Guy, 33610 Canejan (FR); Ledran, Josette, 91160 Longjumeau (FR); Frison, Jean-Claude, 22300 Lannion (FR)
(74) Mandataire: Joly, Jean-Jacques

(56) Documents cités:
- WO-A-96/22943
- FR-A- 2 628 664
- W.LIU: "synthesis and electrochemical studies..." JOURNAL OF THE ELECTROCHEMICAL SOCIETY, vol. 143, no. 3, mars 1996, pages 879-884, XP002032962
- PATENT ABSTRACTS OF JAPAN vol. 095, no. 009, 31 octobre 1995 & JP 07 142065 A (NIPPONDENSO CO LTD), 2 juin 1995,

## Description

La présente invention concerne de manière générale les matériaux d'électrodes positives pour des dispositifs électrochimiques et notamment des générateurs secondaires à ions lithium, et leur préparation.

Elle concerne plus particulièrement un procédé de préparation d'oxyde de formule LiₓMn_{y}O_{z} dans laquelle x est compris entre 0 et 2, y est compris entre 1 et 3, et z est compris entre 3 et 4,5, x, y, z sont tels que l'oxyde a une composition proche de LiMn₂O₄.

L'invention décrit également l'oxyde de formule LiₓMn_{y}O_{z} obtenu par un tel procédé, une électrode positive pour un générateur secondaire à ions lithium comprenant un tel oxyde ainsi qu'un procédé de préparation d'une telle électrode.

Les générateurs secondaires à ions lithium présentent une capacité énergétique bien supérieure à celle des générateurs au plomb, cadmium-nickel ou Ni-métal hydrure.

De ce fait, ils trouvent une application particulièrement avantageuse pour la réalisation de batteries de téléphones mobiles.

De tels générateurs secondaires à ions lithium comprennent un électrolyte conducteur des ions lithium, pris en sandwich entre une électrode positive et une électrode négative.

Les matériaux d'électrode négative peuvent, à titre d'exemple, être le lithium lui-même, un composé d'insertion du lithium dans du carbone, un oxyde susceptible d'insérer du lithium. Dans ces deux derniers cas, les générateurs sont dits « rocking-chair ».

L'électrolyte conducteur des ions lithium, peut être soit un liquide, soit un solide, en général de type polymère, dans lesquels on a dissous un sel de lithium susceptible de s'ioniser pour donner naissance à des ions lithium.

L'électrode positive est constituée d'un oxyde capable d'insérer de façon réversible le lithium.

On peut citer à titre d'exemple les oxydes de formules LiNiO₂ et LiCoO2 et leurs dérivés qui sont actuellement utilisés dans les batteries commerciales ; on citera, par exemple, la batterie « Lithium-ion » qui utilise l'oxyde LiCoO₂ couplé au composé LiₓC.

Par ailleurs, on a déjà proposé comme matériau d'électrode positive, des oxydes doubles de lithium et de manganèse de formule générale LiₓMn_{y}O_{z} dans laquelle les valeurs x, y, z sont telles que l'oxyde a une composition proche de LiMn₂O₄.

Cet oxyde présente industriellement l'avantage de contenir du manganèse d'un prix nettement inférieur à celui du nickel ou du cobalt et conduit donc à des batteries plus performantes et d'un coût inférieur.

On connaît déjà divers procédés pour préparer l'oxyde double de lithium et de manganèse de formule LiₓMn_{y}O_{z}.

Par exemple, on peut citer un procédé de synthèse à l'état solide de l'oxyde double de lithium et de manganèse, à partir de MnO₂ ou de Mn₃O₄ et de divers sels de lithium tels que le carbonate et le nitrate ainsi que de l'hydroxyde.

On connaît également un procédé de synthèse de l'oxyde double de lithium et de manganèse, par pyrolyse de précipités obtenus à partir du carbonate ou d'acétate de lithium et d'acétate de manganèse.

En outre, on connaît un procédé de synthèse sous forme de film d'oxyde double de lithium et de manganèse à partir de cibles de LiMn₂O₄.

Enfin, on connaît un procédé de synthèse selon lequel un complexe polymère du lithium et du manganèse est formé, et l'oxyde LiMn₂O₄ est obtenu par pyrolyse du complexe. Selon ce procédé le polymère n'intervient qu'en tant que matrice support pour éviter l'agglomération des particules mais pas en tant que catalyseur de réaction de formation par réaction explosive de l'oxyde double de lithium et de manganèse.

Ces procédés précités sont explicités plus particulièrement dans les publications suivantes :
- J.M. Tarascon et D. Guyomard « Li Metal-Free Rechargeable Batteries Based on Li1+xMn204 Cathode (0≤x≤1) and Carbon Anodes », J. Electrochem. Soc. Vol. 138, No.10.octobre 1991-pages 2864-2868,
- A. Momchilov et al « Rechargeable Lithium battery with spinel-related MnO2. II. Optimization of the LiMn2O4 synthesis conditions » J. of power Sources, 41 (1993) pages 305-314,
- Quingzhong Xu et Guoxiang Wan « Rechargeable Li/LiMn2O4 batteries with a polymeric solid electrolyte » Journal of Power Sources, 41 (1993) pages 315-320,
- Yvan Gao et J.R Dahn « Thermogravimetric Analysis to determine the lithium to manganese atomic ratio in Li1+xMn2-xO4 » App. Phys. Lett. 66 (19). 8 mai 1995-pages 2487-2489,
- S.R. Sahaya Prabaharan et al « Bulk Synthesis of submicrometre Powders of LiMn2O4 for Secondary Lithium Batteries » J. Mater. Chem. 1995.5 (7)-pages 1035-1037,
- K.H. Hwang et al « fabrication and Characterization of an Li-Mn-O thin film Cathode for rechargeable Lithium microbatteries » J. of Power Sources 54(1995)-pages 224-227,
- K. Kanamura et al « Structural change of the LiMn2O4, Spinel structure induced by extraction of lithium » J. Mater. Chem., 1996, 6(1), pages 33-36.
- W. Liu et al « Synthesis and Electrochemical Studies of Spinel Phase LiMn2O4 Cathode Materials Prepared by the Pechini Process » J. Electrochem. Soc, vol.143, n°3, mars 1996, pages 879-884,
- JP 07142065, HAYAHI YASUSHI, « Manufacture of active material for lithium secondary battery »,
- WO 96 22 943,
- FR 2 628 664.

Un des inconvénients des procédés précités déjà connus de l'état de la technique, est qu'ils ne permettent pas de fabriquer en quantité industrielle (grande quantité) un tel oxyde double de lithium et de manganèse car de tels procédés mis en oeuvre à l'échelle industrielle sur de grandes quantités de produits conduisent à la réalisation d'oxydes LiₓMn_{y}O_{z} non homogènes présentant des cristallites de tailles relativement importantes comportant des défauts. De tels matériaux ne sont pas utilisables notamment pour la fabrication d'électrodes car ils présentent alors une faible efficacité électrochimique.

La présente invention propose un nouveau procédé de préparation d'oxyde de formule LiₓMn_{y}O_{z}, dans laquelle x est compris entre 0 et 2, y est compris entre 1 et 3, et z est compris entre 3 et 4,5, x, y, z sont tels que l'oxyde a une composition proche de LiMn₂O₄ caractérisé en ce qu'il comprend les étapes suivantes :
a) on fabrique un complexe polymère du lithium et du manganèse, sous forme de gel ou de xérogel, en faisant réagir dans un solvant commun un polymère, un copolymère ou un mélange de polymères réducteur(s) possédant des fonctions complexantes pour le lithium et le manganèse, un sel de lithium et un sel de manganèse oxydants, et en évaporant partiellement ou totalement le solvant, et
b) on minéralise par voie explosive oxydo-réductrice le complexe polymère du lithium et du manganèse obtenu pour récupérer de fines particules amorphes de l'oxyde de formule LiₓMn_{y}O_{z}.

Les valeurs de x, y, z dans l'oxyde de formule LiₓMn_{y}O_{z} obtenu selon le procédé conforme à l'invention, sont telles que x, y, z sont liés par la relation x +wy - 2z = 0 où w est le degré d'oxydation moyen du manganèse.

Ainsi, selon le procédé conforme à l'invention, on utilise avantageusement comme précurseurs de l'oxyde de formule LiₓMn_{y}O_{z} des complexes polymères du lithium et du manganèse. Ces complexes se présentent sous la forme de gel ou de xérogel.

Lors de la fabrication de tels complexes polymères, si l'on évapore partiellement le solvant commun utilisé on obtient alors un gel. Si la totalité du solvant est évaporée, on obtient un xérogel pouvant être sous la forme d'un film.

Ces gels et xérogels de complexe polymère du lithium et du manganèse sont appelés « hybrides oxydo-réducteurs» car ils contiennent une partie organique réductrice, le polymère, copolymère ou mélange de polymères, et une partie inorganique oxydante, les sels de lithium et de manganèse complexés.

L'avantage d'utiliser ces précurseurs « hybride oxydo-réducteurs » dans la préparation de l'oxyde de formule LiₓMn_{y}O_{z}, réside dans le fait que dans de tels précurseurs, le lithium et le manganèse sont répartis statistiquement, à l'échelle microscopique, comme ils le seront alors dans l'oxyde de formule L1ₓMn_{y}O_{z} obtenu, le rapport atomique Li/Mn étant égal à x/y. Celui-ci sera, en outre, très finement divisé en raison du caractère explosif de la réaction d'oxydo-réduction mis en oeuvre conformément au procédé selon l'invention.

Il n'est pas possible d'obtenir une telle répartition du lithium et du manganèse dans l'oxyde de formule LiₓMn_{y}O_{z} obtenu selon un procédé de l'état de la technique précité.

Avantageusement, selon le procédé conforme à l'invention, à l'étape a), le solvant utilisé est de l'eau, le polymère réducteur est choisi parmi le polyacrylamide et l'acide polyacrylique, et les sels de lithium et de manganèse sont choisis parmi des chlorures, des nitrates, des acétates ou tout autre sel soluble oxydant dans le solvant choisi.

Selon un mode de réalisation avantageux du procédé conforme à l'invention, à l'étape a), on utilise des sels de lithium et de manganèse contenant des anions oxydants pour fabriquer un complexe polymère du lithium et de manganèse sous la forme d'un xérogel, et à l'étape b), on chauffe le xérogel obtenu à une température d'environ 150 degrés de sorte que les anions oxydants provoquent l'oxydation explosive du polymère pour obtenir des particules amorphes d'oxyde de formule LiₓMnyO_{z}.

On utilisera avantageusement selon ce mode de réalisation précité, une polyacrylamide et des nitrates de lithium et de manganèse. Lors de l'oxydation explosive du polymère, des suies de l'oxyde de formule LiₓMn_{y}O_{z} sont formées. Ce mode de réalisation du procédé selon l'invention correspond à une hypertrempe, le refroidissement ultrarapide des particules ne permettant pas leur cristallisation. Elles se trouvent alors dans un état amorphe. Les particules amorphes d'oxyde de formule LiₓMn_{y}O_{z} ainsi obtenues présentent une taille élémentaire comprise environ entre 1 et 10 nanomètres.

Selon une variante de réalisation du procédé selon l'invention, il est prévu qu'à l'étape a), on utilise des sels de lithium et de manganèse contenant des anions oxydants pour fabriquer un complexe polymère du lithium et du manganèse sous la forme d'un xérogel et à l'étape b), on oxyde de façon explosive sous pression d'oxygène d'environ 100.10⁵ Pa ledit xérogel obtenu, l'amorçage de la réaction de minéralisation étant provoqué par la mise sous tension d'une résistance métallique.

L'invention décrit aussi l'oxyde de formule Li_{×}Mn_{y}O_{z} susceptible d'être obtenu par le procédé précité.

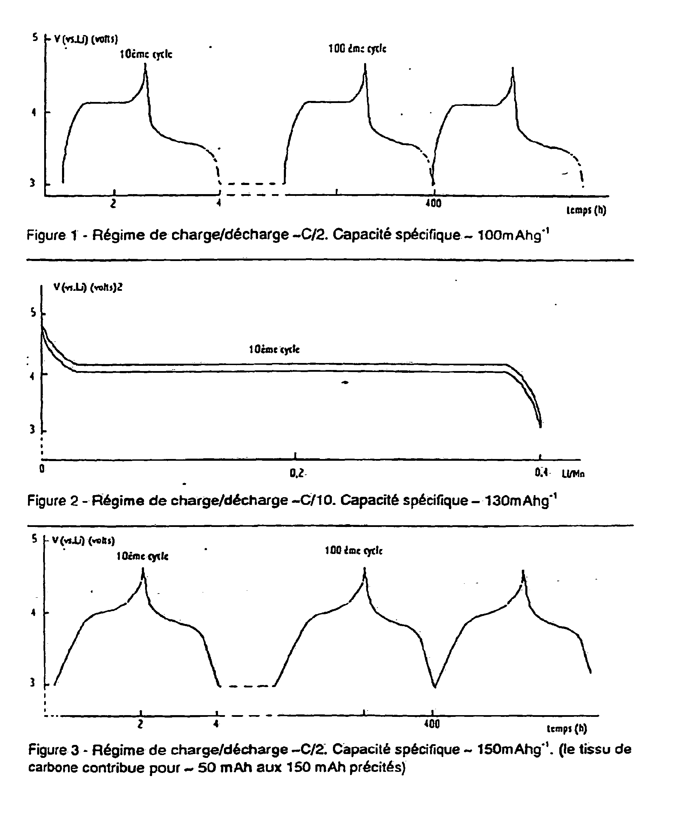

Il convient de préciser que de manière avantageuse, tous les modes de réalisation du procédé conforme à la présente invention, permettent d'obtenir à basse température, notamment en grande quantité à l'échelle industrielle, un matériau stoechiométrique d'oxyde double de lithium et de manganèse, se présentant sous la forme d'une poudre très finement divisée dont la granulométrie est particulièrement homogène, avec des cristallites exempt de défaut ce qui conduit à une grande efficacité électrochimique (voir les courbes électrochimiques des figures 1 à 4). Une telle efficacité électrochimique garantit une composition homogène de l'oxyde LiₓMn_{y}O_{z} obtenu selon le procédé conforme à l'invention, un tel procédé permettant comme nous l'avons déjà mentionné précédemment de conserver le rapport stoechiométrique Li/Mn à l'échelle atomique grâce à l'utilisation de complexes polymères.

Sur le plan industriel, le complexe polymère tout d'abord obtenu selon le procédé conforme à l'invention, se prête particulièrement bien à la réalisation d'un film continu que l'on fait défiler sur un banc transporteur dans un four tunnel pour réaliser le produit pulvérulent final.

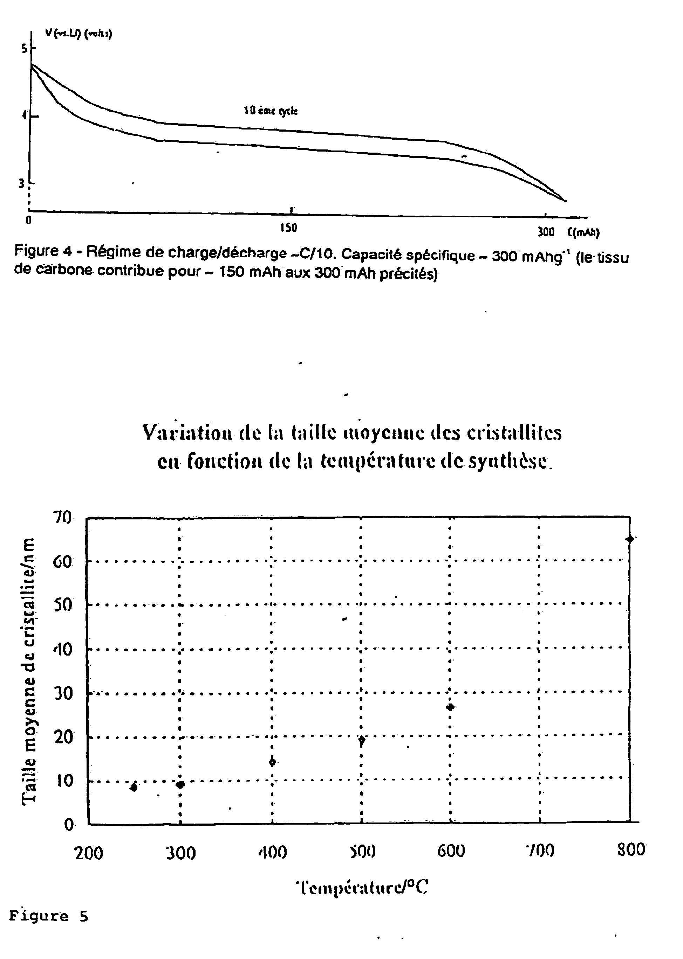

A titre d'exemple, la figure 5 montre l'évolution de la taille des cristallites de l'oxyde considéré en fonction de la température de recuit.

Comme on peut le voir sur cette figure 5, les cristallites du matériau de départ obtenu selon le procédé conforme à l'invention présentent une taille de l'ordre de 10 nm.

Conformément à l'invention, il est décrit en outre une électrode positive pour un générateur secondaire à ions lithium, caractérisée en ce qu'elle comprend un mélange contenant un oxyde de formule LiₓMn_{y}O_{z} tel que décrit dans l'invention, du carbone assurant la conductibilité électrique et un polymère apportant les propriétés mécaniques convenables de l'électrode, ledit mélange étant placé sur un support métallique.

Par exemple, on peut envisager d'utiliser comme polymère du Nylon (marque déposée) ou du polyvinyle-difluorure. Le support métallique peut être une grille réalisée en acier inox, ou une mousse métallique en nickel par exemple.

De manière non conventionnelle, la présente invention décrit également un procédé de préparation d'une électrode positive pour un générateur secondaire à ions lithium, qui comprend les étapes suivantes:
a) on fabrique un complexe polymère du lithium et du manganèse sous forme de gel, en faisant réagir dans un solvant commun un polymère, un copolymère ou un mélange de polymères possédant des fonctions complexantes pour le lithium et le manganèse, un sel de lithium et un sel de manganèse, et en évaporant partiellement le solvant,
b) on imprègne un support métallique avec le gel de complexe polymère de lithium et du manganèse obtenu auquel a été ajouté du carbone finement divisé,
c) on sèche ledit support imprégné,
d) on minéralise ledit support imprégné dans des conditions telles que le carbone et le support métallique ne soient pas eux-mêmes oxydés.

Le support métallique peut être soit une grille, soit une mousse métallique.

Selon une variante de ce procédé précité, il est prévu les étapes suivantes :
a) on fabrique un complexe polymère du lithium et du manganèse sous forme de gel, en faisant réagir dans un solvant commun un polymère, un copolymère ou un mélange de polymères possédant des fonctions complexantes pour le lithium et le manganèse, un sel de lithium et un sel de manganèse et en évaporant partiellement le solvant,
b) on imprègne un support tel qu'un feutre ou un tissu de carbone de très haute surface spécifique, avec le gel de complexe polymère du lithium et du manganèse obtenu, et
c) on minéralise ledit support imprégné à une température égale ou supérieure à 350 degrés sous une atmosphère appropriée.

L'électrode positive ainsi obtenue présente une capacité électrochimique très élevée car les ions lithium sont fixés à la fois sur l'oxyde double de formule LiₓMn_{y}O_{z} et sur le support de carbone.

Il est bien entendu, que la présente invention n'est nullement limitée aux modes de réalisation présentés, mais elle embrasse toutes les variantes, notamment celles relatives à la préparation d'un oxyde de formule LiₓMn_{y}O_{z} dans lequel un atome aurait été remplacé par un atome équivalent. En particulier, on peut envisager qu'un ou plusieurs atome(s) de manganèse soi(ent) remplacé(s) par un ou plusieurs atome(s) de fer.

### EXEMPLE N°1

0,089 g de carbonate de lithium (ALDRICH réf. 20,362-9) et 1,186 g d'acétate de manganèse divalent tétrahydraté (ALDRICH 22, 100-7) et 50 cc d'eau distillée sont placés dans un bêcher avec agitation magnétique ; De l'acide nitrique est ajouté jusqu'à dissolution complète des constituants.

1 g de poly(acrylamide) (ALDRICH 18, 127-7) est lentement ajouté à la solution. L'ensemble est agité magnétiquement pendant 12 heures à 50°C. L'eau est ensuite évaporée sur plaque chauffante à 90°C jusqu'à obtention d'un xérogel. Celui-ci est porté à 150°C environ ; une minéralisation explosive se produit conduisant à une suie d'oxyde amorphe aux rayons X. Cette suie est pyrolysée pendant 12 heures à l'air à 500°C. Les spectres de diffraction X laissent apparaître le spectre de la phase spinelle correspondant à la formule LiMn₂O₄.

0,020 g de cette poudre sont mélangés à 0,002 g de carbone amorphe (ALDRICH 38, 946-3). L'ensemble est mélangé avec 0, 003 g de poly(tétrafluoroethylène) (ALDRICH 18,247-8). Une électrode souple sous forme d'un disque de 1 cm de diamètre et de 100 µm d'épaisseur environ est obtenue par pressage du mélange précédent sous une pression de 1000 kg/cm². Eventuellement un support grille d'acier inoxydable, peut être utilisée lors du pressage pour renforcer les propriétés mécaniques.

Un générateur secondaire est réalisé de la façon suivante :
L'électrode positive étant constituée du composite précédent, l'électrode négative d'un disque de lithium métallique (ALDRICH 26,599-3). L'électrolyte est composé de une mole de LiPF₆ (ALDRICH 20,114-6) par litre dissous dans une solution contenant 67% massique de carbonate d'éthylène (ALDRICH E2,625-8) et 33% massique de diméthyl carbonate de propylène (ALDRICH D15,292-7). Un disque (GLASS MICROFIBRE FILTERS, WHATMAN) est imbibé de cette solution et constitue le séparateur. Les trois disques négative, séparateur, positive sont placés dans un cylindre de téflon. Deux collecteurs métalliques en acier inoxydable assurent le contact électrique entre respectivement la négative et la positive.

Le comportement électrochimique de cet ensemble a été étudié en mode galvanostatique.

La figure 1 représente les résultats obtenus pour un cyclage en C/2 correspondant à un courant appliqué de 1 mA. Elle illustre la réversibilité du système électrochimique. Il correspond à une capacité de 100 mA.h/g de matériau de cathode vérifié au-delà de 100 cycles ; la capacité est supérieure à 130 mA.H/g pour un cyclage en C/10 (figure 2).

### EXEMPLE N°2

0,123 g d'acétate de lithium dihydraté (ALDRICH réf. 21,319-5) et 1,186 g d'acétate de manganèse divalent tétrahydraté (ALDRICH réf. 22,100-7) et 50 cc d'eau distillée sont placés dans un bêcher avec agitation magnétique.

1 g d'acide poly(acrylique) (FLUKA réf. 81140) est lentement ajouté à la solution. L'ensemble est agité magnétiquement pendant 12 heures à 50°C. L'eau est partiellement évaporée sur plaque chauffante à 50°C jusqu'à obtention d'un gel. Un tissu de carbone à très haute surface spécifique, 2000 m²/g - (KYNOL activated carbon) est imbibé par ce gel et séché à l'étuve à 100°C. L'ensemble est recuit ensuite à 500°C pendant 10 heures.

Le composite correspondra à un mélange équimassique des deux constituants. Ces proportions permettent de cumuler les effets capacitifs du tissu de carbone et d'intercalation de l'oxyde, les deux constituants étant en effet directement en contact avec l'électrolyte.

Comme dans l'exemple 1, une batterie est réalisée en utilisant un séparateur et une négative similaires.

La figure 3 représente les résultats obtenus pour un cyclage en C/2 correspondant à un courant appliqué de 1 mA. Elle illustre également l'excellente réversibilité du système électrochimique. Il correspond à une capacité de 150 mA.h/g de matériau d'oxyde. Pour un cyclage en C/10, on atteint des capacités supérieures à 300 mA.h/g (fig.4). Ces capacités élevées mettent en évidence l'intérêt du tissu de carbone dont l'effet capacitif s'ajoute au processus d'insertion dans l'oxyde. En outre, il permet d'éviter l'utilisation d'un collecteur de courant conventionnel dont la masse est préjudiciable à la capacité massique globale de la batterie.

## Revendications

1. Procédé de préparation d'oxyde de formule LiₓMn_{y}O_{z}, dans laquelle x est compris entre 0 et 2, y est compris entre 1 et 3, et z est compris entre 3 et 4,5, x, y, z sont tels que l'oxyde a une composition proche de LiMn₂O₄, **caractérisé en ce qu'**il comprend les étapes suivantes :
a) on fabrique un complexe polymère du lithium et du manganèse, sous forme de gel ou de xérogel, en faisant réagir dans un solvant commun un polymère, un copolymère ou un mélange de polymères réducteur(s) possédant des fonctions complexantes pour le lithium et le manganèse, un sel de lithium et un sel de manganèse contenant des anions oxydants, et en évaporant partiellement ou totalement le solvant,
b) on minéralise par voie explosive oxydo-réductrice le complexe polymère du lithium et du manganèse obtenu, sous pression d'oxygène d'environ 100.10⁵ Pa, l'amorçage de la réaction de minéralisation étant provoqué par la mise sous tension d'une résistance métallique pour récupérer de fines particules amorphes de l'oxyde de formule LiₓMn_{y}O_{z}.

2. Procédé selon la revendication 1, **caractérisé en ce qu'**à l'étape a), le solvant utilisé est de l'eau, le polymère réducteur est choisi parmi la polyacrylamide et l'acide polyacrylique, et les sels de lithium et de manganèse sont choisis parmi des chlorures, des nitrates, des acétates ou tout autre sel soluble oxydant dans le solvant choisi.

## Claims

1. A method of preparing an oxide of formula LiₓMn_{y}O_{z}, in which x lies in the range 0 to 2, y lies in the range 1 to 3, and z lies in the range 3 to 4.5, x, y, and z being such that the oxide has a composition close to LiMn₂O₄, the method being **characterized in that** it comprises the following steps:
a) a polymer complex of lithium and of manganese is prepared in the form of a gel or of a xerogel by causing a reducing polymer, copolymer or polymer mixture possessing complexing functions for lithium and manganese to react in a common solvent with a lithium salt and manganese salt containing oxidizing anions, and by evaporating off the solvent, partially or in full; and
b) the resulting lithium and manganese polymer complex is mineralized by the explosive oxidation-reduction technique under oxygen pressure of about 100×10⁵ Pa, the triggering of the mineralisation reaction being caused by applying voltage to a metal resistor to recover fine amorphous particles of the oxide of formula LiₓMn_{y}O_{z}

2. A method according to claim 1, **characterized in that** in step a), the solvent used is water, the reducing polymer is selected from polyacrylamide and polyacrylic acid, and the lithium and manganese salts are selected from chlorides, nitrates, acetates, and any other oxidizing salt that is soluble in the selected solvent.

## Patentansprüche

1. Verfahren zur Herstellung eines Oxids der Formel Li_{×}Mn_{y}O_{z}, in welcher x zwischen 0 und 2 einschließlich ist, y zwischen 1 und 3 einschließlich ist und z zwischen 3 und 4,5 einschließlich ist, x, y, z derart sind, dass das Oxid eine Zusammensetzung nahe LiMn₂O₄ aufweist, **dadurch gekennzeichnet, dass** es die folgenden Schritte umfasst:
a) man stellt einen polymeren Komplex des Lithiums und des Mangans in Form eines Gels oder eines Xerogels her, indem man in einem gemeinsamen Lösemittel ein reduzierendes Polymer, ein reduzierendes Copolymer oder eine Mischung von reduzierenden Polymeren, welche(s) Funktionen, welche das Lithium und das Mangan komplexieren können, aufweist bzw. aufweisen, ein Lithiumsalz und ein Mangansalz, enthaltend oxydierende Anionen, reagieren lässt und das Lösemittel teilweise oder vollständig verdampft,
b) man mineralisiert den erhaltenen polymeren Komplex des Lithiums und des Mangans unter einem Sauerstoffdruck von ungefähr 100.10⁵ Pa auf explosive oxidativ-reduktive Weise, wobei das Starten der Mineralisierungsreaktion durch das Unterspannungsetzen eines metallischen Widerstands bewirkt wird, um feine amorphe Teilchen des Oxids der Formel LiₓMn_{y}O_{z} zu gewinnen.

2. Verfahren nach Anspruch 1, **dadurch gekennzeichnet, dass** in Schritt a) das eingesetzte Lösemittel Wasser ist, das reduzierende Polymer unter Polyacrylamid und Polyacrylsäure ausgewählt wird und die Lithium- und Mangansalze unter Chloriden, Nitraten, Acetaten oder einem jeglichen anderen oxidierenden Salz, welches in dem ausgewählten Lösemittel löslich ist, ausgewählt werden.
